# EUROPÄISCHE PATENTSCHRIFT

(11) **EP 2 603 791 B1**
(45) Veröffentlichungstag und Bekanntmachung des Hinweises auf die Patenterteilung: **28.10.2020**
(21) Anmeldenummer: 11766898.8
(22) Anmeldetag: 05.09.2011
(51) Int. Cl.: G01N 29/04, G01N 29/06

(54) **VERFAHREN UND VORRICHTUNG ZUR ERMITTLUNG EINER ORIENTIERUNG EINES INNERHALB EINES MECHANISCHEN BAUTEILS BESTEHENDEN DEFEKTES**
METHOD AND DEVICE FOR DETERMINING AN ORIENTATION OF A DEFECT PRESENT WITHIN A MECHANICAL COMPONENT
PROCÉDÉ ET DISPOSITIF POUR LA DÉTERMINATION D'UNE ORIENTATION D'UN DÉFAUT EXISTANT À L'INTÉRIEUR D'UNE PIÈCE MÉCANIQUE

(30) Priorität: 16.09.2010 DE 102010040856
(43) Veröffentlichungstag der Anmeldung: 19.06.2013
(73) Patentinhaber: Siemens Aktiengesellschaft, 80333 München (DE)
(72) Erfinder: GOLDAMMER, Matthias, 80687 München (DE); HEINRICH, Werner, 16727 Oberkrämer OT Bärenklau (DE); MOOSHOFER, Hubert, 80538 München (DE)
(86) Internationale Anmeldenummer: PCT/EP2011/065269
(87) Internationale Veröffentlichungsnummer: WO 2012/034882

(56) Entgegenhaltungen:
- EP-A1- 2 051 070
- WO-A1-2008/138684
- PIGNONE E: "Enhancement in image quality in ultrasonic flaw detection process in rotor turbine using SAFT", IMAGING SYSTEMS AND TECHNIQUES, 2004. (IST). 2004 IEEE INTERNATIONAL W ORKSHOP ON STRESA, ITALY MAY 14, 2004, PISCATAWAY, NJ, USA,IEEE, 14. Mai 2004 (2004-05-14), Seiten 117-122, XP010773429, DOI: 10.1109/IST.2004.1397296 ISBN: 978-0-7803-8591-7
- DEUTSCH V ET AL: "3.4.3.6 Rechnergestützte Fehlerbeschreibung", ULTRASCHALLPRUEFUNG: GRUNDLAGEN UND INDUSTRIELLE ANWENDUNGEN, XX, XX, 1. Januar 1997 (1997-01-01), Seiten 133-141, XP002278716,
- SPIES M., JAGER W.: "Synthetic aperture focusing for defect reconstruction in anisotropic media", ULTRASONICS, vol. 41, 2003,

## Beschreibung

Die Erfindung betrifft ein Verfahren und eine Vorrichtung zur Ermittlung einer Orientierung eines innerhalb eines mechanischen Bauteils bestehenden Defektes mittels Ultraschallprüfung.

Aus der EP 2 051 070 A1 und der WO 2008/138684 A1 sind SAFT-Verfahren zur zerstörungsfreien Materialprüfung eines Prüfgegenstandes mit Ultraschallwellen bekannt. In WO 2008/138684 wird eine winkelabhängige Amplitudenverteilung verwendet, um einen Korrekturfaktor zu bestimmen.

Ein Verfahren zur Verbesserung der Bildqualität ist bekannt aus Pignone: "Enhancment in image quality in ultrasonic flaw detection process in rotor turbine using SAFT", Imaging Systems and Techniques, 2004, Seiten 117-122.

Ultraschallprüfverfahren sind beschrieben in Deutsch et al.: "3.4.3.6 Rechnergestützte Fehlerbeschreibung", Ultraschallprüfung: Grundlagen und industrielle Anwendungen, 1997, Seiten 133-141.

Weiter ist ein Fokussierungsverfahren bekannt aus Spies et al.: "Synthetic aperture focusing for defect reconstruction in anisotropic media", Ultrasonics, Bd. 41, 2003; durch eine dreidimensionale Defekt-Rekonstruktion werden Lage, Form, Größe und Orientierung von Defekten ermittelt.

Die Ultraschallprüfung ist ein zerstörungsfreies Werkstoffprüfverfahren, um Bauteile, die aus schallleitfähigen Werkstoffen, beispielsweise Metall, Kunststoff, Keramik oder Beton bestehen, auf innere und äußere Fehler bzw. Defekte sowie Inhomogenitäten aller Art, beispielsweise Risse, Schlackeneinschlüsse, Lunker usw. zu untersuchen.

Aufgrund der einfachen und universellen Anwendbarkeit sowie der Tatsache, dass das Prüfpersonal keiner Strahlenbelastung ausgesetzt ist, sind Ultraschallprüfverfahren eines der am häufigsten eingesetzten zerstörungsfreien Werkstoffprüfverfahren.

Mit Ultraschallprüfverfahren werden beispielsweise große Schmiedeteile, wie etwa Radscheiben, Wellen oder Hohlwellen, die im Betrieb hohen Belastungen ausgesetzt sind, möglicherweise nach deren Herstellung ggf. in einem konturarmen Zustand, mit Ultraschall geprüft. Werden durch das Ultraschallprüfverfahren Defekte angezeigt kann anhand des angezeigten Defektes entschieden werden, ob das geprüfte Bauteil zum Einsatz kommt oder nicht.

Zur Erkennung und besseren Charakterisierung von Defekten wird zum Teil das sogenannte SAFT-Verfahren (Synthetique Aperture Focusing Technique) eingesetzt. Bei einer phasenrichtigen Summierung der gemessenen Ultraschallsignale wird für jeden Punkt im Volumen des zu untersuchenden Bauteils eine lokalisierte Defektanzeige erhalten. Bei einer Variante des SAFT-Verfahren, dem sogenannten FT-SAFT-Verfahren, erfolgt eine Signalauswertung zur schnelleren Berechnung im Frequenzbereich.

Ein Nachteil des herkömmlichen SAFT-Verfahrens besteht jedoch darin, dass man hierdurch keinerlei Information über die Orientierung bzw. Ausrichtung von kleineren Defekten innerhalb des Bauteils erhält, die insbesondere für die Bewertung, ob ein Bauteil zum Einsatz kommt, von Bedeutung sein kann. Abhängig von der jeweiligen Belastung und der Geometrie des jeweiligen Bauteils kann die Orientierung eines bestehenden Defektes von unterschiedlicher Bedeutung sein. Handelt es sich bei dem Bauteil beispielsweise um eine Radscheibe, sind radial orientierte Defekte innerhalb des Bauteils problematisch, da tangentiale Zugkräfte das Wachstum des Defektes bzw. Risses fördern. Demgegenüber können tangential orientierte Defekte bzw. Risse in dem Bauteil eher toleriert werden.

Es ist daher eine Aufgabe der vorliegenden Erfindung, ein Verfahren und eine Vorrichtung zur Ermittlung einer Orientierung eines innerhalb eines mechanischen Bauteils bestehenden Defektes zu schaffen.

Diese Aufgabe wird erfindungsgemäß durch ein Verfahren mit den in Patentanspruch 1 angegebenen Merkmalen gelöst.

Die Erfindung schafft ein Verfahren zum Ermitteln einer Orientierung eines innerhalb eines mechanischen Bauteils bestehenden Defektes mit den Merkmalen des Patentanspruchs 1.

Bei einer Ausführungsform des erfindungsgemäßen Verfahrens werden die zeitlich an den verschiedenen Messpunkten versetzt empfangenen Echo-Ultraschallsignale unter Berücksichtigung einer Winkelcharakteristik des Ultraschallkopfes phasenrichtig summiert.

Bei einer möglichen Ausführungsform des erfindungsgemäßen Verfahrens werden die verschiedenen Echo-Ultraschallsignale, die an den verschiedenen Messpunkten durch den Ultraschallkopf empfangen werden, zusammen mit den Ortskoordinaten des jeweiligen Messpunktes in einem Speicher zur Auswertung zwischengespeichert.

Bei einer bevorzugten Ausführungsform des erfindungsgemäßen Verfahrens wird für die zwischengespeicherten Echo-Ultraschallsignale eine Hüllkurve ermittelt.

Bei einer möglichen Ausführungsform des erfindungsgemäßen Verfahrens werden hierzu die zwischengespeicherten Echo-Ultraschallsignale gleichgerichtet und tiefpassgefiltert.

Bei einer alternativen Ausführungsform des erfindungsgemäßen Verfahrens werden hierzu die zwischengespeicherten Echo-Ultraschallsignale einer Hilbert-Transformation und einer Betragsbildung unterzogen.

Erfindungsgemäß wird eine Winkelcharakteristik der gleichgerichteten Echo-Ultraschallsignale in Abhängigkeit der Beschallungsrichtung statistisch ausgewertet.

Bei einer möglichen Ausführungsform des erfindungsgemäßen Verfahrens erfolgt das Auswerten der empfangenen Echo-Ultraschallsignale nur dann, wenn die Signalamplitude der phasenrichtig addierten Echo-Ultraschallsignale einen einstellbaren Schwellenwert überschreitet.

Bei einer möglichen Ausführungsform des erfindungsgemäßen Verfahrens erfolgt eine richtungsabhängige phasenrichtige Addition der Echo-Ultraschallsignale, insbesondere durch Gewichtung mit einem Sinus- oder Cosinusfaktor.

Bei einer möglichen Ausführungsform des erfindungsgemäßen Verfahrens wird als Orientierung des Defektes ein zweidimensionaler Flächen-Orientierungswinkel ausgegeben.

Bei einer alternativen Ausführungsform des erfindungsgemäßen Verfahrens wird als Orientierung des Defektes ein dreidimensionaler Raum-Orientierungswinkel des Defektes ausgegeben.

Bei einer möglichen Ausführungsform des erfindungsgemäßen Verfahrens wird in Abhängigkeit von der ermittelten Orientierung des in dem Bauteil bestehenden Defektes und anhand gespeicherter Geometriedaten des Bauteils eine zukünftige Ausfallwahrscheinlichkeit des Bauteils berechnet.

Bei einer möglichen Ausführungsform des erfindungsgemäßen Verfahrens werden zur Berechnung der Ausfallwahrscheinlichkeit des Bauteils mechanische Belastungskräfte, die im Betrieb auf das Bauteil wirken, berücksichtigt.

Bei einer möglichen Ausführungsform des erfindungsgemäßen Verfahrens wird bei einer Bewertung einer Anzeige die ermittelte Orientierung berücksichtigt, um eine korrekte Anzeigengröße zu erfassen.

Die Erfindung schafft ferner eine Vorrichtung zur Ermittlung einer Orientierung eines innerhalb eines mechanischen Bauteils bestehenden Defektes mit den Merkmalen des Patentanspruchs 13.

Bei einer möglichen Ausführungsform der erfindungsgemäßen Vorrichtung werden die Ultraschallsignale durch mindestens einen Ultraschallkopf generiert, der auf der Oberfläche des mechanischen Bauteils beweglich angeordnet ist und das mechanische Bauteil ausgehend von den Messpunkten mit Ultraschallsignalen beaufschlagt.

Bei einer möglichen Ausführungsform der erfindungsgemäßen Vorrichtung werden die Ultraschallsignale durch einen Array-Prüfkopf mit mehreren Ultraschallköpfen generiert.

Bei einer möglichen Ausführungsform der erfindungsgemäßen Vorrichtung weist diese einen Speicher auf, welcher die verschiedenen Echo-Ultraschallsignale, die an den verschiedenen Messpunkten empfangen werden, zusammen mit den Ortskoordinaten des jeweiligen Messpunktes zur weiteren Auswertung zwischenspeichert.

Bei einer möglichen Ausführungsform der erfindungsgemäßen Vorrichtung werden die in dem Speicher zwischengespeicherten Echo-Ultraschallsignale durch eine Transformationseinheit einer Hilbert-Transformation und einer Betragsbildung unterzogen.

Bei einer alternativen Ausführungsform der erfindungsgemäßen Vorrichtung werden die in dem Speicher zwischengespeicherten Echo-Ultraschallsignale durch eine Transformationseinheit gleichgerichtet und tiefpassgefiltert.

Bei einer möglichen Ausführungsform der erfindungsgemäßen Vorrichtung berechnet die Auswerteeinheit in Abhängigkeit von der ermittelten Orientierung des in dem Bauteil bestehenden Defektes und anhand gespeicherter Geometriedaten des Bauteiles eine zukünftige Ausfallwahrscheinlichkeit des Bauteiles.

Die Erfindung schafft ferner eine Maschine mit einer Vorrichtung zur Ermittlung einer Orientierung eines innerhalb eines mechanischen Bauteils bestehenden Defektes mit den Merkmalen des Patentanspruchs 18.

Im Weiteren werden mögliche Ausführungsformen der erfindungsgemäßen Vorrichtung und des erfindungsgemäßen Verfahren zum Ermitteln einer Orientierung eines innerhalb eines mechanischen Bauteils bestehenden Defektes unter Bezugnahme auf die beigefügten Figuren beschrieben.

Es zeigen:
- Figur 1: ein Blockschaltbild einer möglichen Ausführungsform der erfindungsgemäßen Vorrichtung zur Ermittlung einer Orientierung eines innerhalb eines mechanischen Bauteils bestehenden Defektes;
- Figur 2: ein Ablaufdiagramm einer möglichen Ausführungsform eines erfindungsgemäßen Verfahrens zur Ermittlung einer Orientierung eines innerhalb eines mechanischen Bauteils bestehenden Defektes.

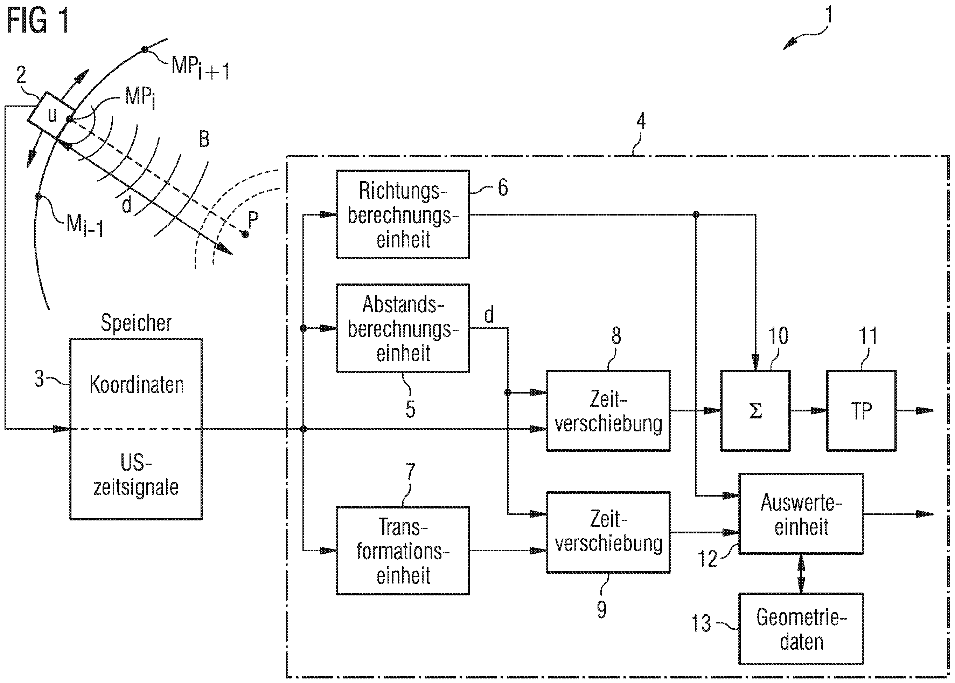

Wie man in Fig. 1 erkennen kann, weist die erfindungsgemäße Vorrichtung 1 zur Ermittlung einer Orientierung eines innerhalb eines mechanischen Bauteils B bestehenden Defektes, mindestens einen Ultraschallkopf 2 auf, der das mechanische Bauteil ausgehend von verschiedenen Messpunkten MP mit Ultraschallsignalen beaufschlagt. Dabei werden Echo-Ultraschallsignale, die von einem innerhalb des Bauteils B befindlichen, zu untersuchenden Punkt P zu den Messpunkten MP zurückreflektiert werden, von dem gleichen oder einem anderen Ultraschallkopf empfangen.

Bei einer möglichen Ausführungsform werden die Ultraschallsignale durch einen Ultraschallkopf 2 generiert, der auf der Oberfläche des mechanischen Bauteils B beweglich angeordnet ist und das mechanische Bauteil B ausgehend von den verschiedenen Messpunkten MP mit Ultraschallsignalen beaufschlagt. Bei einer möglichen Ausführungsform werden die Ultraschallsignale durch einen Array-Prüfkopf mit mehreren Ultraschallköpfen 2 generiert.

Die Schallausbreitung innerhalb des Bauteils erfolgt in Form einer elastischen Welle, die an die Materie des Bauteils B gebunden ist. Bei der Materie kann es sich um einen festen, flüssigen oder gasförmigen Stoff handeln. Bei der Schallausbreitung wird keine Materie transportiert, vielmehr schwingen die Materienteilchen des Bauteils B, das beispielsweise aus Atomen, Ionen oder Molekülen besteht, des jeweiligen Ausbreitungsmediums an ihren Aufenthalt periodisch um eine Ruhelage und übertragen dabei ihre Bewegung auf benachbarte Teilchen. Auf diese Weise breitet sich der Schwingungsvorgang mit einer für das Ausbreitungsmedium bzw. Bauteilmaterial charakteristischen Schallgeschwindigkeit aus. Schall mit einer Frequenz über 20 kHz wird allgemein als Ultraschall bezeichnet. Das Erzeugen von Ultraschall durch den Ultraschallkopf 2 kann auf unterschiedliche Weise erfolgen. Beispielsweise kann ein piezoelektrischer Effekt ein magnetorestriktiver Effekt ausgenutzt werden. Bei einer möglichen Ausführungsform dient der Ultraschallkopf 2, wie in Fig. 1 dargestellt, sowohl als Sender als auch Empfänger von Ultraschallwellen. Alternativ kann das von dem zu untersuchenden Punkt P zurückgeworfene Echo-Ultraschallsignal durch einen anderen Ultraschallkopf empfangen werden. Ultraschallwellen breiten sich geradlinig aus. Treffen die Ultraschallwellen jedoch bei ihrem Durchgang durch den Prüfling bzw. das Bauteil B auf Grenzflächen, beispielsweise Grenzflächen, die durch Poren, Lunker, Risse oder Schlackeeinflüsse hervorgerufen sind, gehen die Ultraschallsignale nicht über diese Fehlstelle hinweg, sondern werden von ihnen reflektiert. Bei der Ultraschallprüfung könne entweder die durchgelassenen oder die reflektierenden Schallanteile gemessen werden. Reflektions- bzw. Echo-Ultraschallverfahren haben dabei verschiedene Vorteile, insbesondere kann die Tiefenlage eines Defektes bzw. Fehlers ermittelt werden. Weiterhin muss das zu prüfende Bauteil bei dem Echo-Ultraschallverfahren nur von einer Seite zugänglich sein. Weiterhin ist keine exakte Ausrichtung zwischen Sender und Empfänger erforderlich, da nur eine Ankopplungsfläche für den Ultraschallkopf 2 vorhanden ist.

Wie man in Fig. 1 erkennen kann, werden die verschiedenen Echo-Ultraschallsignale, die an den verschiedenen Messpunkten MP empfangen werden, zur weiteren Auswertung in einem Datenspeicher 3 zwischengespeichert. In dem Datenspeicher 3 befinden sich somit die Koordinaten der jeweiligen Messpunkte MPᵢ und die zugehörigen gesampleten Echo-Ultraschallsignale der jeweiligen Messpunkte MP. Die Vorrichtung 1 weist ferner eine Datenverarbeitungseinheit 4 auf, die die in dem Datenspeicher 3 zwischengespeicherten Echo-Ultraschallsignale für die verschiedenen Messpunkte MPᵢ auswertet. Die Datenverarbeitungseinheit 4 wertet die empfangenen Echo-Ultraschallsignale in Abhängigkeit einer Beschallungsrichtung zwischen dem jeweiligen Messpunkt MPᵢ und dem zu untersuchenden Punkt P zur Bestimmung der Orientierung eines Defektes aus. Dabei wird in Abhängigkeit von einer erfassten Signallaufzeit zwischen dem Zeitpunkt der Abgabe des Ultraschallsignales und dem Zeitpunkt des Empfangs des durch einen Defekt zurückreflektierten Echo-Ultraschallsignals für jeden Messpunkt MPᵢ ein Abstand d zwischen dem Messpunkt MPᵢ und dem zu untersuchenden Punkt P berechnet und die zeitlich versetzt an den verschiedenen Messpunkten MPᵢ empfangenen Echo-Ultraschallsignale des zu untersuchenden Punkte P phasenrichtig zu ihrer Auswertung addiert.

Bei dem in Fig. 1 dargestellten Ausführungsbeispiel weist die Datenverarbeitungseinheit 4 eine Abstandsberechnungseinheit 5 auf, die einen Abstand d zwischen dem jeweiligen Messpunkt MP und dem zu untersuchenden Punkt P berechnet. Weiterhin weist die Datenverarbeitungseinheit 4 eine Richtungs- bzw. und Orientierungsberechnungseinheit 6 auf, die die empfangenen Echo-Ultraschallsignale, die von dem innerhalb des Bauteils B befindlichen, zu untersuchenden Punkt P zu den Messpunkten MPᵢ zurückreflektiert werden, in Abhängigkeit einer Beschallungsrichtung zwischen dem jeweiligen Messpunkt MP und dem zu untersuchenden Punkt P des Bauteils B zur Bestimmung der Orientierung des Defektes auswertet.

Die Datenverarbeitungseinheit 4 weist ferner eine optionale Signaltransformationseinheit 7 auf. Diese Transformationseinheit 7 berechnet für die zwischengespeicherten Echo-Ultraschallsignale jeweils eine Hüllkurve. Bei einer möglichen Ausführungsform werden durch die Transformationseinheit 7 die zwischengespeicherten Echo-Ultraschallsignale gleichgerichtet und tiefpassgefiltert. Bei einer alternativen Ausführungsform werden die zwischengespeicherten Echo-Ultraschallsignale durch die Transformationseinheit 7 einer Hilbert-Transformation und einer Betragsbildung unterzogen.

Die Datenverarbeitungseinheit 4 weist ferner Zeitverschiebungseinheiten 8, 9 auf, welche eine phasenrichtige Addition der beitragenden Echo-Ultraschallsignale erlauben. Die Zeitverschiebung erfolgt dabei in Abhängigkeit des durch die Abstandsberechnungseinheit 5 berechneten Abstandes d. Durch eine Summationsschaltung bzw. Addierschaltung 10 erfolgt eine richtungsabhängige phasenrichtige Addition der aus dem Datenspeicher 3 ausgelesenen Echo-Ultraschallsignale für die verschiedenen Messpunkte. Die richtungsabhängige phasenrichtige Addition kann beispielsweise durch Gewichtung mit einem Sinus- oder Kosinusfaktor für die ermittelte Richtung durchgeführt werden. Anschließend kann das aufsummierte, gewichtete Signal durch ein Tiefpassfilter 11 der Datenverarbeitungseinheit 4 geglättet werden.

Die Datenverarbeitungseinheit 4 weist ferner eine Auswerteeinheit 12 auf. Die Auswerteeinheit 12 wertet die Winkelcharakteristik der Echo-Ultraschallsignale in Abhängigkeit der Beschallungsrichtung statistisch aus. Die Winkelcharakteristik gibt dabei eine Abhängigkeit der Signalamplitude in Abhängigkeit der Beschallungsrichtung an. Bei einer möglichen Ausführungsform berechnet die Auswerteeinheit 12 in Abhängigkeit von der ermittelten Orientierung des in dem Bauteil B bestehenden Defektes anhand gespeicherter Geometriedaten des Bauteils B eine mögliche zukünftige Ausfallwahrscheinlichkeit des jeweiligen Bauteils B. Bei einer möglichen Ausführungsform hat die Auswerteeinheit 12 hierzu Zugriff auf einen Datenspeicher 13, in dem Geometriedaten des zu untersuchenden Bauteils B abgelegt sind.

Bei einer möglichen Ausführungsform berechnet die Auswerteeinheit 12 in Abhängigkeit von der ermittelten Orientierung des in dem Bauteil B bestehenden Defektes anhand der aus dem Datenspeicher 13 ausgelesenen Geometriedaten des Bauteils eine zukünftige Ausfallwahrscheinlichkeit des Bauteils. Dabei werden vorzugsweise auch mechanische Belastungskräfte, die in einem Betrieb des Bauteils B auf das Bauteil B wirken können, berücksichtigt.

Zur Orientierung des Defektes des Bauteils B wird durch die Datenverarbeitungseinheit 4 bei einer möglichen Ausführung ein zweidimensionaler Flächenorientierungswinkel ausgegeben. Weiterhin ist es möglich, dass die Datenverarbeitungseinheit 4 einen dreidimensionalen Raumorientierungswinkel des Defektes ausgibt. Bei einer möglichen Ausführungsform kann eine farbkodierte Darstellung der Richtungsinformation phasenrichtiger Echo-Summen erfolgen.

Für die Bestimmung der Orientierung des Defektes wird ein Mittelwert oder ein Medianwert berechnet Weiterhin wird als ein Maß für die Richtwirkung des Defektes eine Standardabweichung bzw. eine Varianz berechnet. Der Mittelwert gibt dabei einen Winkel an, während die Standardabweichung bzw. die Varianz einen Winkelbereich angibt.

Bei einer möglichen Ausführungsform kann die in Fig. 1 dargestellte Datenverarbeitungseinheit 4 in einer Maschine integriert sein und ein Bauteil B dieser Maschine zur Ermittlung einer Orientierung eines innerhalb des Bauteils B auftretenden Defektes überwachen.

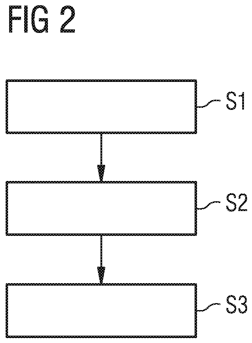

Fig. 2 zeigt ein Ablaufdiagramm zur Darstellung der wichtigsten Schritte des erfindungsgemäßen Verfahrens zum Ermitteln einer Orientierung eines innerhalb eines mechanischen Bauteils B bestehenden Defektes.

In einem ersten Schritt S1 wird zunächst das mechanische Bauteil B ausgehend von verschiedenen Messpunkten MP mit einem Ultraschallsignal beaufschlagt. Dabei werden die Ultraschallsignale durch mindestens einen Ultraschallkopf 2 generiert, der an den Messpunkten MP jeweils ein Ultraschallsignal an das Bauteil B abgibt. Weiterhin werden durch den Ultraschallkopf zeitlich verzögert jeweils zurückgeworfene Echo-Ultraschallsignale empfangen.

In einem weiteren Schritt S2 werden die empfangenen Echo-Ultraschallsignale, die von einem innerhalb des Bauteils B befindlichen zu untersuchenden Punkt P zu den Messpunkten MP zurückreflektiert werden, in Abhängigkeit einer Beschallungsrichtung zwischen dem jeweiligen Messpunkt MP und dem zu untersuchenden Punkt P des Bauteils B zur Bestimmung der Orientierung eines Defektes ausgewertet.

In einem weiteren Schritt S3 wird in Abhängigkeit von einer erfassten Signallaufzeit zwischen dem Zeitpunkt der Abgabe des Ultraschallsignals und dem Zeitpunkt des Empfangs des zurückreflektierten Echo-Ultraschallsignals für jeden Messpunkt ein Abstand d zwischen dem Messpunkt MP und dem zu untersuchenden Punkt P berechnet. Die zeitlich versetzt an den verschiedenen Messpunkten MP empfangenen Echo-Ultraschallsignale des zu untersuchenden Punktes P werden phasenrichtig zu ihrer Auswertung addiert.

In einer möglichen Ausführungsform wird das Prüfobjekt bzw. das Bauteil ein oder mehrmals mit Ultraschallköpfen 2 mit verschiedenen Einschallwinkeln gescannt. Dabei wird ein interessierender Bereich des Bauteils B definiert und ein Auswertegitter festgelegt, das den interessierenden Bereich des Bauteils B abdeckt. Das Gitter wird dabei derart fein aufgelöst bereitgestellt, dass keine Defekte übersehen werden können. Bei den Gitterpunkten erfolgt nicht nur eine phasenrichtige Überlagerung der Echo-Ultraschallsignale aller beitragenden Messpositionen, sondern auch eine Berechnung der Orientierung von Defekten, indem eine Richtung bzw. Ausrichtung zwischen einem beitragenden Messpunkt MP und dem zu untersuchenden Punkt P die Amplitude des Signalbeitrags berücksichtigt. Das erfindungsgemäße Ermitteln einer Orientierung eines innerhalb eines mechanischen Bauteils B bestehenden Defektes kann bei einer möglichen Ausführungsform parallel zu einer herkömmlichen SAFT-Auswertung durchgeführt werden. Alternativ kann das erfindungsgemäße Verfahren im Anschluss an eine herkömmliche SAFT-Berechnung bzw. -Auswertung durchgeführt werden. Bei einer möglichen Ausführungsform wird das erfindungsgemäße Verfahren im Anschluss an die Herstellung des Bauteils B durchgeführt. Bei einer weiteren möglichen Ausführungsform des erfindungsgemäßen Verfahrens wird das Verfahren während des laufenden Betriebes des Bauteils B zu dessen Überwachung ausgeführt.

Bei möglichen Ausführungsvarianten kann durch Änderung der Reihenfolge von Berechnungsschritten eine Rechenzeitoptimierung der Datenverarbeitungseinheit 4 erreicht werden. Beispielsweise können komplexe Ultraschallsignale vorab berechnet werden. Bei einer weiteren möglichen Ausführungsform erfolgt das Auswerten der empfangenen Echo-Ultraschallsignale nur dann, wenn die Signalamplitude der phasenrichtig addierten Echo-Ultraschallsignale einen einstellbaren Signal-Schwellenwert überschreitet. Weiterhin kann eine zusätzliche Nachsignalverarbeitung erfolgen, beispielsweise durch Filterung und Glättung von Richtungsinformationsdaten. Weiterhin kann das SAFT-Ergebnis abhängig von der ermittelten Richtung in radiale, tangentiale und axiale Komponenten aufgeteilt bzw. zerlegt werden.

Bei einer möglichen Ausführungsform erfolgt eine vektorielle Darstellung der Signalbeiträge der verschiedenen Messpunkte. Dabei wird der Beitrag des Messpunktes MP durch phasenrichtige Auswertung des gleichgerichteten Ultraschallsignals ermittelt. Es kann eine Bestimmung der vektoriellen und beitragsmäßigen Summe zur Charakterisierung der Richtung, das heißt der Richtung der Vektorsumme, und der Richtwirkung, das heißt dem Betrag der Vektorsumme, im Verhältnis zur betragsmäßigen Summe erfolgen. Das ermittelte SAFT-Ergebnis und die ermittelten Orientierung können helligkeits- bzw. farbkodiert auf einer Anzeige für eine Betriebsperson dargestellt werden. Bei möglichen Ausführungsformen können mehrere Hauptrichtungen 2 in der Ebene bzw. drei im Raum, berücksichtigt werden, wobei die Hauptrichtungen in jedem zu untersuchenden Punkt P unterschiedlich sein können. Bei möglichen Ausführungsformen erfolgt die phasenrichtige Addition der Ultraschallsignale für jede Hauptrichtung getrennt. Dabei kann eine Gewichtung der Signalbeiträge mit einem Kosinus- bzw. Sinusfaktor zwischen Schallrichtung und Hauptrichtung durchgeführt werden. Bei möglichen Ausführungsformen sind die Hauptrichtungen zueinander senkrecht. Bei alternativen Ausführungsformen sind die Hauptrichtungen zueinander nicht senkrecht. Die Anzahl der Hauptrichtungen kann variieren. Bei einer möglichen Ausführungsform erfolgt eine Umrechnung der Ergebnisse von verschiedenen Hauptrichtungen nach Betrag und Phase. Die durch das erfindungsgemäße Verfahren ermittelten Rechenergebnisse lassen sich nutzen zur Einspeisung der Defektpositionen und Defektorientierung in eine mechanische Simulation des geprüften Bauteils B, beispielsweise um gefundene Defekte zu bewerten und eine zukünftige Ausfallswahrscheinlichkeit zu berechnen. Beispielsweise können Bauteile B, die kleinere Defekte aufweisen, deren Orientierung unkritisch ist, für einen Einsatz bzw. Betrieb ist auch für höhere Belastungen zugelassen werden. Mit dem erfindungsgemäßen Verfahren wird die Defektorientierung eines Defektes bei gleichzeitig guter Trennung bzw. Auflösung nahe benachbarter Defekte charakterisiert. Durch das erfindungsgemäße Verfahren wird die Nachweisempfindlichkeit durch Reduzierung des Rauschens und der Divergenz des Ultraschallsignals erhöht. Die gewonnenen Informationen über die Defektorientierung können in Zusammenhang mit dem bei der Konstruktion betrachteten radialen, tangentialen oder axialen Spannungen bzw. Kräften gebracht werden, so dass man die Zulässigkeit von Defekten besser bewertet werden kann, insbesondere wenn ein Bauteil B hauptsächlich in einer bestimmten Richtung belastet wird. Auf diese Weise können hergestellte Bauteile B zugelassen werden, die ansonsten aufgrund der Sicherheitsreserve verworfen werden müssen, obwohl sie an sich einsatztauglich wären. Die mit dem erfindungsgemäßen Verfahren geprüften Bauteile B können im Betrieb für höhere Belastungen zugelassen werden. Das erfindungsgemäße Verfahren kann bei einer möglichen Ausführungsform auch bei einer sogenannten Tauchtechnik-Prüfung verwendet werden. Bei einer möglichen Ausführungsform weist die Datenverarbeitungseinheit 4 eine Eingabeeinrichtung bzw. eine Schnittstelle auf, über die zusätzliche Information über das Bauteil A angegeben werden können. Beispielsweise können über die Schnittstelle eine oder mehrere Materialkonstanten des Bauteilmaterials eingegeben werden. Weiterhin ist es möglich, über diese Schnittstelle eine Ausbreitungsgeschwindigkeit von Ultraschallsignalen in dem zu untersuchenden Bauteil B einzugeben und gegebenenfalls diese in einem entsprechenden Datenspeicher zu hinterlegen. Bei einer weiteren möglichen Ausführungsform verfügt die Datenverarbeitungseinheit 4 zudem über eine Schnittstelle zum Anschluss von Messsensoren, welche Belastungskräfte messen, die auf das Bauteil B während dessen Betriebes wirken. Bei einer möglichen Ausführungsform ist der Datenspeicher 3 in der Datenverarbeitungseinheit 4 integriert und über eine Schnittstelle mit einem oder mehreren Ultraschallköpfen 2 verbunden. Der Empfang der Ultraschallzeitsignale sowie der Koordinaten der Messpunkte MP kann über eine drahtlose oder eine drahtgebundene Schnittstelle zu der Datenverarbeitungseinheit 4 erfolgen. Die Ultraschallköpfe 2 können beispielsweise über ein Datennetzwerk mit der Datenverarbeitungseinheit 4 verbunden sein. Weiterhin ist es möglich, dass die Koordinaten der Messpunkte MP sowie die entsprechende Ultraschallzeitsignale lokal in einem Datenspeicher 3 eingeschrieben werden. Bei diesem lokalen Datenspeicher kann es sich beispielsweise um einen tragbaren Datenträger handeln. Weiterhin ist es möglich, dass verschiedene Einheiten der Datenverarbeitungseinheit 4 in einer gemeinsamen Berechnungseinheit integriert sind. So kann beispielsweise die Richtungsberechnungseinheit 6, die Abstandsberechnungseinheit 5 sowie die Transformationseinheit 7 durch einen oder mehrere Mikroprozessoren implementiert werden. Weiterhin kann bei einer möglichen Ausführungsform die Bewegung des Ultraschallkopfes 2 beispielsweise auf der Oberfläche des zu untersuchenden Prüflings B, in Abhängigkeit von den gemessenen Daten gesteuert werden. Wird mit dem Ultraschallkopf 2 beispielsweise eine interessante Stelle innerhalb des Bauteils B entdeckt, kann der Ultraschallkopf 2 gezielt durch die Datenverarbeitungseinheit 4 zu geeigneten Messpunkten MPᵢ bewegt werden, um mehr Daten für die Defektorientierung des erfassten Defektes zu gewinnen. Bei den in dem Bauteil B auftretenden Defekten handelt es sich vor allem um ungewollte Defekte, wie beispielsweise Risse und dergleichen. Bei einer möglichen Ausführungsform können die in dem Bauteil B vorhandenen Defekte auch gewünschte Ausnehmungen umfassen, beispielsweise Hohlräume oder Bohrungen, wobei mit dem erfindungsgemäßen Verfahren überprüft wird, ob die Orientierung und Ausdehnung des Defektes den Vorgaben bzw. Sollwerten entspricht. Bei weiteren möglichen Ausführungsformen ist die Frequenz mit der das Ultraschallsignal von dem Ultraschallkopf 2 in das zu untersuchende Bauteil B abgestrahlt wird, einstellbar. Auf diese Weise ist es möglich unterschiedliche Stellen bzw. Defekte mit unterschiedlichen Schallfrequenzen zu untersuchen.

## Patentansprüche

1. Verfahren zum Ermitteln einer Orientierung eines innerhalb eines mechanischen Bauteils (B) bestehenden Defektes mit den Schritten:
(a) Beaufschlagen (S1) des mechanischen Bauteiles (B) mit Ultraschallsignalen ausgehend von verschiedenen Messpunkten (MP),
wobei die Ultraschallsignale durch mindestens einen Ultraschallkopf (2) generiert werden, der an den Messpunkten (MP) jeweils ein Ultraschallsignal an das Bauteil (B) abgibt, wobei zeitlich verzögert jeweils ein dadurch generiertes Echo-Ultraschallsignal durch diesen Ultraschallkopf (2) oder einen anderen Ultraschallkopf empfangen wird;
(b) Berechnen einer Winkelcharakteristik der empfangenen Echo-Ultraschallsignale in Abhängigkeit einer Beschallungsrichtung zwischen dem jeweiligen Messpunkt (MP) und zu untersuchenden Punkten (P), wobei die Winkelcharakteristik eine Abhängigkeit der Signalamplitude in Abhängigkeit der Beschallungsrichtung angibt,
(c) wobei (S3) in Abhängigkeit von einer erfassten Signallaufzeit zwischen dem Zeitpunkt der Abgabe des Ultraschallsignals und dem Zeitpunkt des Empfangs des zurückreflektierten Echo-Ultraschallsignals für jeden Messpunkt (MP) ein Abstand (d) zwischen dem Messpunkt (MP) und den zu untersuchenden Punkten (P) berechnet wird und die zeitlich versetzt an den verschiedenen Messpunkten (MP) empfangenen Echo-Ultraschallsignale der zu untersuchenden Punkte (P) phasenrichtig zu ihrer Auswertung addiert werden;
(d) wobei die Winkelcharakteristik zur Bestimmung der Orientierung des Defektes statistisch ausgewertet wird, wobei ein Mittelwert und/oder ein Medianwert berechnet wird, welcher einen Winkel des Defekts kennzeichnet, und wobei eine Standardabweichung und/oder eine Varianz berechnet werden, welche einen Winkelbereich angibt.

2. Verfahren nach Anspruch 1, wobei die zeitlich an den verschiedenen Messpunkten versetzt empfangenen Echo-Ultraschallsignale unter Berücksichtigung einer Winkelcharakteristik der Ultraschallköpfe phasenrichtig summiert werden.

3. Verfahren nach Anspruch 1, wobei die verschiedenen Echo-Ultraschallsignale, die an den verschiedenen Messpunkten (MP) durch den Ultraschallkopf (2) empfangen werden, zusammen mit den Ortskoordinaten des jeweiligen Messpunktes (MP) in einem Speicher (3) zur Auswertung zwischengespeichert werden.

4. Verfahren nach Anspruch 2, wobei für die zwischengespeicherten Echo-Ultraschallsignale eine Hüllkurve ermittelt wird.

5. Verfahren nach Anspruch 4, wobei die zwischengespeicherten Echo-Ultraschallsignale gleichgerichtet und tiefpassgefiltert werden.

6. Verfahren nach Anspruch 4, wobei die zwischengespeicherten Echo-Ultraschallsignale eine Hilbert-Transformation und einer Betragsbildung unterzogen werden.

7. Verfahren nach Anspruch 1, wobei das Auswerten der empfangenen Echo-Ultraschallsignale nur erfolgt, wenn die Signalamplitude der phasenrichtig addierten Echo-Ultraschallsignale einen einstellbaren Schwellenwert überschreitet.

8. Verfahren nach Anspruch 1, wobei eine richtungsabhängige phasenrichtige Addition der Echo-Ultraschallsignale, insbesondere durch Gewichtung mit einem Sinus- oder Cosinusfaktor erfolgt.

9. Verfahren nach einem der Ansprüche 1 bis 8, wobei als Orientierung des Defektes ein zweidimensionaler Flächen-Orientierungswinkel oder ein dreidimensionaler Raum-Orientierungswinkel des Defektes ausgegeben wird.

10. Verfahren nach einem der Ansprüche 1 bis 9, wobei in Abhängigkeit von der ermittelten Orientierung des in dem Bauteil (B) bestehenden Defektes und anhand gespeicherter Geometriedaten des Bauteils (B) eine zukünftige Ausfallwahrscheinlichkeit des Bauteils (B) berechnet wird.

11. Verfahren nach Anspruch 10, wobei zur Berechnung der Ausfallwahrscheinlichkeit des Bauteils (B) mechanische Belastungskräfte, die im Betrieb auf das Bauteil (B) wirken, berücksichtigt werden.

12. Verfahren nach Anspruch 1, wobei bei einer Bewertung einer Anzeige die ermittelte Orientierung berücksichtigt wird, um eine korrekte Anzeigengröße zu erfassen.

13. Vorrichtung zur Ermittlung einer Orientierung eines innerhalb eines mechanischen Bauteils (B) bestehenden Defektes mit:
- mindestens einem Ultraschallkopf (2), der das mechanische Bauteil (B) ausgehend von verschiedenen Messpunkten (MP) mit Ultraschallsignalen beaufschlagt, wobei Echo-Ultraschallsignale, die von innerhalb des Bauteils (B) befindlichen, zu untersuchenden Punkten (P) zu den Messpunkten (MP) zurückreflektiert werden, von dem gleichen oder einem anderen Ultraschallkopf (2) empfangen werden; und
- mit einer Datenverarbeitungseinheit (4), welche dazu ausgebildet ist eine Winkelcharakteristik der empfangenen Echo-Ultraschallsignale in Abhängigkeit einer Beschallungsrichtung zwischen dem jeweiligen Messpunkt (MP) und den zu untersuchenden Punkten (P) zu berechnen, wobei die Winkelcharakteristik eine Abhängigkeit der Signalamplitude in Abhängigkeit der Beschallungsrichtung angibt,
wobei die Datenverarbeitungseinheit (4) dazu ausgebildet ist, in Abhängigkeit von einer erfassten Signallaufzeit zwischen dem Zeitpunkt der Abgabe des Ultraschallsignals und dem Zeitpunkt des Empfangs des durch einen Defekt zurückreflektierten Echo-Ultraschallsignals für jeden Messpunkt (MP) ein Abstand (d) zwischen dem Messpunkt (MP) und den zu untersuchenden Punkten (P) zu berechnen und die zeitlich versetzt an den verschiedenen Messpunkten (MP) empfangenen Echo-Ultraschallsignale der zu untersuchenden Punkte (P) phasenrichtig zu ihrer Auswertung zu addieren; und
mit einer Auswerteeinheit (12), welche ausgebildet ist, die Winkelcharakteristik zur Bestimmung der Orientierung des Defektes statistisch auszuwerten, wobei die Auswerteeinheit (12) ausgebildet ist, einen Mittelwert und/oder einen Medianwert zu berechnen, welcher einen Winkel des Defekts kennzeichnet, und wobei die Auswerteeinheit (12) ausgebildet ist, eine Standardabweichung und/oder eine Varianz zu berechnen, welche einen Winkelbereich angibt.

14. Vorrichtung nach Anspruch 13, mit einem Speicher (3), welcher die verschiedenen Echo-Ultraschallsignale, die an den verschiedenen Messpunkten (MP) empfangen werden, zusammen mit den Ortskoordinaten des jeweiligen Messpunktes (MP) zur weiteren Auswertung zwischenspeichert.

15. Vorrichtung nach Anspruch 14, die mit einer Transformationseinheit vorgesehen ist, die dazu ausgebildet ist, die in dem Speicher (3) zwischengespeicherten Echo-Ultraschallsignale einer Hilbert-Transformation und einer Betragsbildung zu unterziehen.

16. Vorrichtung nach Anspruch 14, die mit einer Transformationseinheit vorgesehen ist, die dazu ausgebildet ist, die in dem Speicher (3) zwischengespeicherten Echo-Ultraschallsignale gleichzurichten und tiefpasszufiltern.

17. Vorrichtung nach Anspruch 13, wobei die Auswerteeinheit (12) ausgebildet ist, in Abhängigkeit von der ermittelten Orientierung des in dem Bauteil (B) bestehenden Defektes und anhand gespeicherter Geometriedaten des Bauteiles (B) eine zukünftige Ausfallwahrscheinlichkeit des Bauteiles (B) zu berechnen.

18. Maschine mit einer Vorrichtung nach einem der Ansprüche 13 bis 17, wobei die Vorrichtung (1) ein Bauteil (B) der Maschine zur Ermittlung einer Orientierung eines innerhalb des Bauteils (B) auftretenden Defektes überwacht.

## Claims

1. Method for determining an orientation of a defect present within a mechanical component (B), comprising the steps:
a) applying (S1) ultrasonic signals emitted from various measuring points (MP) to the mechanical component (B),
wherein the ultrasonic signals are generated by at least one ultrasonic head (2) which applies an ultrasonic signal to the component (B) at each of the measuring points (MP), wherein an echo ultrasonic signal thereby generated is received temporally offset by said ultrasonic head (2) or a different ultrasonic head in each case;
b) calculating an angular characteristic of the received echo ultrasonic signals depending on a sound emission direction between the respective measuring point (MP) and the point (P) to be investigated, wherein the angular characteristic gives a dependency of the signal amplitude on the sound emission direction;
c) wherein (S3), depending on a detected signal propagation time between the time point of emission of the ultrasonic signal and the time point of reception of the reflected echo ultrasonic signal for each measuring point (MP), a distance (d) between the measuring point (MP) and the points (P) under investigation is calculated and the echo ultrasonic signals from the points (P) under investigation and received temporally offset at the different measuring points (MP) are added together in phase for the analysis thereof.
d) wherein the phase characteristic is analysed to statistically determine the orientation of the defect, wherein a mean value or a median value is calculated, which indicates an angle of the defect, and wherein a standard deviation and/or a variance are calculated, which gives an angular range.

2. Method according to claim 1, wherein the echo ultrasonic signals received temporally offset at the different measuring points are added together in phase taking account of an angular characteristic of the ultrasonic head.

3. Method according to claim 1, wherein the different echo ultrasonic signals that are received at the different measuring points (MP) by the ultrasonic head (2) are placed in intermediate storage in a memory store (3) together with the spatial coordinates of the respective measuring point (MP).

4. Method according to claim 2, wherein an envelope curve is determined for the echo ultrasonic signals placed in intermediate storage.

5. Method according to claim 4, wherein the echo ultrasonic signals placed in intermediate storage are rectified and low-pass filtered.

6. Method according to claim 4, wherein the echo ultrasonic signals placed in intermediate storage are subjected to a Hilbert transformation and absolute value generation.

7. Method according to claim 1, wherein analysis of the echo ultrasonic signals received takes place only once the signal amplitude of the in-phase added-together echo ultrasonic signals exceeds a settable threshold value.

8. Method according to claim 1, wherein a direction-dependent in-phase addition of the echo ultrasonic signals is carried out, in particular by weighting with a sine factor or a cosine factor.

9. Method according to one of claims 1 to 8, wherein as the orientation of the defect, a two-dimensional plane orientation angle or a three-dimensional solid orientation angle of the defect is output.

10. Method according to one of claims 1 to 9, wherein, depending on the determined orientation of the defect present in the component (B) and based on stored geometric data of the component (B), a future failure probability of the component (B) is calculated.

11. Method according to claim 10, wherein in order to calculate the failure probability of the component (B), mechanical loading forces which act upon the component (B) during operation are taken into account.

12. Method according to claim 1, wherein during evaluation of an indication, the orientation as determined is taken into account in order to detect a correct indication variable.

13. Device for determining an orientation of a defect present within a mechanical component (B), comprising:
- at least one ultrasonic head (2) which applies ultrasonic signals to the mechanical component (B) from various measuring points (MP), wherein echo ultrasonic signals which are reflected by points (P) to be investigated present within the component (B) to the measuring points (MP), are received by the same or another ultrasonic head (2); and
- a data processing unit (4) which is configured to calculate an angular characteristic of the received echo ultrasonic signals depending on a sound emission direction between the respective measuring point (MP) and the points (P) to be investigated, wherein the angular characteristic gives a dependency of the signal amplitude on the sound emission direction;
wherein the data processing unit (4) is configured, depending on a detected signal propagation time between the time point of emission of the ultrasonic signal and the time point of reception of the echo ultrasonic signal reflected by a defect for each measuring point (MP), to calculate a distance (d) between the measuring point (MP) and the points (P) to be investigated, and to add together in phase the echo ultrasonic signals of the points (P) to be investigated received temporally offset at the various measuring points (MP) for the analysis thereof, and
an analysis unit (12), which is configured to statistically analyse the angular characteristic to determine the orientation of a defect, wherein the analysis unit (12) is configured to a calculate a mean value and/or a median value, which indicates an angle of the defect, and wherein the analysis unit (12) is configured to calculate a standard deviation and/or a variance, which gives an angular range.

14. Device according to claim 13, comprising a memory store (3) which places the various echo ultrasonic signals that are received at the different measuring points (MP) together with the spatial coordinates of each measuring point (MP) into storage for further analysis.

15. Device according to claim 14, which is provided with a transforming unit which is configured to subject the echo ultrasonic signals placed in intermediate storage in the memory store (3) to a Hilbert transformation and absolute value formation.

16. Device according to claim 14, which is provided with a transforming unit which is configured to rectify and deep-pass filter the echo ultrasonic signals placed in intermediate storage in the memory store (3).

17. Device according to claim 13, wherein the analysing unit (12) is configured to calculate a future failure probability for the component (B) depending on the orientation of the defect present in the component (B) as determined and based on stored geometric data of the component (B).

18. Machine having a device according to claims 13 to 17, wherein the device (1) monitors a component (B) of the machine in order to determine an orientation of a defect occurring within the component (B).

## Revendications

1. Procédé de détermination de l'orientation d'un défaut existant au sein d'une pièce (B) mécanique, comprenant les stades :
(a) on soumet (S1) la pièce (B) mécanique à des signaux d'ultrasons à partir de points (MP) de mesure différents,
les signaux d'ultrasons étant produits par au moins une tête (2) à ultrasons, qui émet, aux points (MP) de mesure, respectivement, un signal d'ultrasons vers la pièce (B), un signal d'ultrasons d'écho, ainsi produit, respectivement, étant reçu de manière retardée dans le temps par cette tête (2) à ultrasons ou par une autre tête à ultrasons ;
(b) on calcule une caractéristique angulaire des signaux d'ultrasons d'écho reçus en fonction d'une direction de sonorisation entre le point (MP) de mesure respectif et des points (P) à examiner, la caractéristique angulaire indiquant une dépendance de l'amplitude du signal en fonction de la direction de sonorisation,
(c) dans lequel (S3), en fonction d'un temps de parcours du signal, qui est relevé entre l'instant de l'émission du signal d'ultrasons et l'instant de la réception du signal d'ultrasons d'écho réfléchi, on calcule, pour chaque point (MP) de mesure, une distance (d) entre le point (MP) de mesure et les points (P) à examiner et on additionne, de manière correcte en phase pour leur exploitation, les signaux d'ultrasons d'écho des points (P) à examiner, reçus de manière décalée dans le temps aux divers points (P) de mesure ;
(d) dans lequel on exploite statistiquement la caractéristique angulaire pour la détermination de l'orientation du défaut, en calculant une valeur moyenne et/ou une valeur médiane, qui caractérise un angle du défaut, et dans lequel on calcule un écart-type et/ou une variance, qui indique une plage angulaire.

2. Procédé suivant la revendication 1, dans lequel on somme, d'une manière correcte en phase, les signaux d'ultrasons d'écho reçus de manière décalée dans le temps aux divers points de mesure, en tenant compte d'une caractéristique angulaire des têtes à ultrasons.

3. Procédé suivant la revendication 1, dans lequel on met en mémoire tampon, pour l'exploitation dans une mémoire (3), les divers signaux d'ultrasons d'écho, qui sont reçus aux divers points (MP) de mesure par la tête (2) à ultrasons, ensemble avec les coordonnées dans l'espace du point (MP) de mesure respectif.

4. Procédé suivant la revendication 2, dans lequel on détermine une courbe enveloppe pour les signaux d'ultrasons d'écho mis en mémoire tampon.

5. Procédé suivant la revendication 4, dans lequel on redresse et on filtre passe-bas les signaux d'ultrasons d'écho mis en mémoire tampon.

6. Procédé suivant la revendication 4, dans lequel on soumet les signaux d'ultrasons d'écho mis en mémoire tampon à une transformation de Hilbert et à une formation de valeur absolue.

7. Procédé suivant la revendication 1, dans lequel on n'effectue l'exploitation des signaux d'ultrasons d'écho reçus, que si l'amplitude des signaux d'ultrasons d'écho additionnés de manière correcte en phase dépasse une valeur de seuil réglable.

8. Procédé suivant la revendication 1, dans lequel une addition correcte en phase en fonction de la direction des signaux d'ultrasons d'écho est effectuée, notamment par pondération par un facteur sinus ou cosinus.

9. Procédé suivant l'une des revendications 1 à 8, dans lequel on émet, comme orientation du défaut, un angle d'orientation en surface en deux dimensions ou un angle d'orientation dans l'espace en trois dimensions du défaut.

10. Procédé suivant l'une des revendications 1 à 9, dans lequel, en fonction de l'orientation déterminée du défaut existant dans la pièce (B) et à l'aide de données géométriques mises en mémoire de la pièce (B), on calcule une probabilité de défaillance de la pièce (B) à l'avenir.

11. Procédé suivant la revendication 10, dans lequel, pour le calcul de la probabilité de défaillance de la pièce (B), on prend en compte des forces mécaniques de charge, qui s'appliquent lorsque la pièce (B) est en fonctionnement.

12. Procédé suivant la revendication 11, dans lequel, pour évaluer un affichage, on prend en compte l'orientation déterminée, afin de détecter une grandeur d'affichage correcte.

13. Système de détermination d'une orientation d'un défaut existant au sein d'une pièce (B) mécanique, comprenant :
- au moins une tête (2) à ultrasons, qui soumet la pièce (B) mécanique à des signaux d'ultrasons à partir de divers points (MP) de mesure, des signaux d'ultrasons d'écho, qui sont réfléchis aux points (MP) de mesure par des points (P) à examiner se trouvant à l'intérieur de la pièce (B), étant reçus par la même tête (2) à ultrasons ou par une autre tête (2) à ultrasons ; et
- comprenant une unité (4) de traitement de données, qui est constituée pour calculer une caractéristique angulaire des signaux d'ultrasons d'écho reçus, en fonction d'une direction de sonorisation entre le point (MP) de mesure respectif et les points (P) à examiner, la caractéristique angulaire indiquant une dépendance de l'amplitude du signal en fonction de la direction de sonorisation,
dans lequel l'unité (4) de traitement de données est constitué pour calculer, en fonction d'un temps de parcours du signal relevé, entre l'instant de l'émission du signal d'ultrasons et l'instant de la réception du signal d'ultrasons d'écho réfléchi par un défaut, pour chaque point (MP) de mesure, une distance (d) entre le point (MP) de mesure et les points (P) à examiner et à additionner, d'une manière correcte en phase pour leur exploitation, les signaux d'ultrasons d'écho des points (P) à examiner, reçus de manière décalée dans le temps aux divers points (MP) de mesure ; et
comprenant une unité (12) d'exploitation, qui est constituée pour exploiter, statistiquement, la caractéristique angulaire pour déterminer l'orientation du défaut, l'unité (12) d'exploitation étant constituée pour calculer une valeur moyenne et/ou une valeur médiane, qui caractérise un angle du défaut, et dans lequel l'unité (12) d'exploitation est constituée pour calculer un écart-type et/ou une variance, qui indique une plage angulaire.

14. Système suivant la revendication 13, comprenant une mémoire (3), qui met en mémoire tampon, pour une exploitation ultérieure, les divers signaux d'ultrasons d'écho, qui sont reçus aux divers points (MP) de mesure, ensemble avec les coordonnées dans l'espace du point (MP) de mesure respectif.

15. Système suivant la revendication 14, qui est pourvu d'une unité de transformation, constituée pour soumettre les signaux d'ultrasons d'écho mis en mémoire tampon dans la mémoire (3), à une transformation de Hilbert et à une formation de valeur absolue.

16. Système suivant la revendication 14, qui est pourvu d'une unité de transformation, constituée pour redresser et filtrer passe-bas les signaux d'ultrasons d'écho mis en mémoire tampon dans la mémoire (3).

17. Système suivant la revendication 13, dans lequel l'unité (12) d'exploitation est constituée pour calculer une probabilité de défaillance de la pièce (B) à l'avenir, en fonction de l'orientation déterminée du défaut existant dans la pièce (B) et à l'aide de données géométriques mises en mémoire de la pièce (B).

18. Machine ayant un système suivant l'une des revendications 13 à 17, le système (1) contrôlant une pièce (B) de la machine, afin de déterminer une orientation d'un défaut se produisant à l'intérieur de la pièce (B).
